# EUROPEAN PATENT APPLICATION

(11) **EP 4 550 228 A1**
(43) Date of publication of application: **07.05.2025**
(21) Application number: 23830795.3
(22) Date of filing: 17.04.2023
(51) Int. Cl.: G06Q 10/04, B66B 1/14, G06Q 50/16

(54) **MOBILE BODY INTRODUCTION ASSISTANCE SYSTEM, AND MOBILE BODY INTRODUCTION ASSISTANCE METHOD**

(30) Priority: 29.06.2022 JP 2022104188
(71) Applicant: Hitachi, Ltd., Tokyo 100-8280 (JP)
(72) Inventor: NISHIO Naoya, Tokyo 100-8280 (JP); HATORI Takahiro, Tokyo 101-8941 (JP)
(74) Representative: MERH-IP Matias Erny Reichl Hoffmann Patentanwälte PartG mbB
(86) International application number: PCT/JP2023/015369
(87) International publication number: WO 2024/004341

(57) **Abstract**

This mobile body introduction assistance system includes: a congestion degree calculation unit; and a heterogeneous agent operation number calculation unit. The congestion degree calculation unit acquires information about a degree of congestion of people and a heterogeneous agent that are moving within a building, the heterogeneous agent being a mobile body different from the people. The heterogeneous agent operation number calculation unit determines the number of heterogeneous agents to operate on the basis of the congestion degree information acquired by the congestion degree calculation unit.

## Description

### Technical Field

The present invention relates to a mobile body introduction assistance system and a mobile body introduction assistance method.

### Background Art

When an elevator is installed, specifications such as the capacity of the elevator car and the number of elevator cars are determined so that sufficient carrying capacity can be secured for the people flow at the maximum congestion in the building to install the elevator. In recent years, with the progress of barrier-free accessibility and smart building, not only people but also wheelchairs, personal mobility devices, service robots, and the like have increased opportunities to use elevators.

Wheelchairs, personal mobility devices, and service robots (hereinafter, referred to as "heterogeneous agent") not only take more time to go in and out from the elevator car than people, but also have a larger occupied area in the elevator car than people. In addition, the installation plan of an elevator is determined on the assumption that people are carried. Thus, when the number of heterogeneous agents increases, the carrying capacity of the elevator assumed in advance cannot be exhibited, and the service performance of the elevator deteriorates.

Technologies for controlling movement of a mobile body other than people include a technology described in Patent Literature 1, for example. Patent Literature 1 describes a technology including an information storage unit, a congestion situation prediction unit, and an operation mode setting unit. Patent Literature 1 describes that an operation mode setting unit sets a robot to one of a plurality of operation modes having different influences on the degree of congestion of a service providing area.

### Citation List

### Patent Literature

Patent Literature 1: JP 2019-940 A

### Summary of Invention

### Technical Problem

However, in the technology described in Patent Literature 1, when congestion is predicted, the robot is caused to stand by in a standby area, and its movement is stopped. Thus, service performance of the robot lowers.

In consideration of the above problem, an object of the present invention is to provide a mobile body introduction assistance system and a mobile body introduction assistance method capable of securing the carrying capacity of an elevator and suppressing lowering in service performance of heterogeneous agents.

### Solution to Problem

To solve the above problem and achieve the object, a mobile body introduction assistance system includes a congestion degree calculation unit that acquires congestion degree information of people who move in a building and heterogeneous agents that move in the building, the heterogeneous agents being mobile bodies different from people, and a heterogeneous agent operation number calculation unit that determines the number of the heterogeneous agents to operate based on the congestion degree information acquired by the congestion degree calculation unit.

A mobile body introduction assistance method includes processing shown in the following (1) and (2).
(1) Processing of acquiring congestion degree information of people who move in a building and heterogeneous agents that move in the building, the heterogeneous agents being mobile bodies different from people, by using a congestion degree calculation unit.
(2) Processing of determining the number of the heterogeneous agents to operate by using a heterogeneous agent operation number calculation unit based on the congestion degree information acquired by the congestion degree calculation unit.

### Advantageous Effects of Invention

The mobile body introduction assistance system and the mobile body introduction assistance method having the above-described configurations can secure the carrying capacity of an elevator and suppress lowering in service performance of heterogeneous agents.

### Brief Description of Drawings

Fig. 1 is a block diagram illustrating a schematic configuration of a mobile body introduction assistance system according to a first exemplary embodiment.
Fig. 2 is a diagram illustrating an example of specification information of the mobile body introduction assistance system according to the first exemplary embodiment.
Fig. 3 is a diagram illustrating an example of heterogeneous agent specification information of the mobile body introduction assistance system according to the first exemplary embodiment.
Fig. 4 is a diagram illustrating traffic demand information of the mobile body introduction assistance system according to the first exemplary embodiment.
Fig. 5 is a flowchart illustrating an operation example of determining the number of heterogeneous agents to operate that is an operation example of the mobile body introduction assistance system according to the first exemplary embodiment.
Fig. 6 is a flowchart illustrating a method for calculating the congestion degree of the mobile body introduction assistance system according to the first exemplary embodiment.
Fig. 7 is a flowchart illustrating a method for outputting an operation performance report of the mobile body introduction assistance system according to the first exemplary embodiment.
Fig. 8 is a diagram illustrating an operation performance report of the mobile body introduction assistance system according to the first exemplary embodiment.
Fig. 9 is a diagram illustrating another example of traffic demand information of the mobile body introduction assistance system according to the first exemplary embodiment.
Fig. 10 is a block diagram illustrating a schematic configuration of a mobile body introduction assistance system according to a second exemplary embodiment.
Fig. 11 is a flowchart illustrating an operation example of determining the number of heterogeneous agents to operate that is an operation example of the mobile body introduction assistance system according to the second exemplary embodiment.
Fig. 12 is a block diagram illustrating a schematic configuration of a mobile body introduction assistance system according to a third exemplary embodiment.

### Description of Embodiments

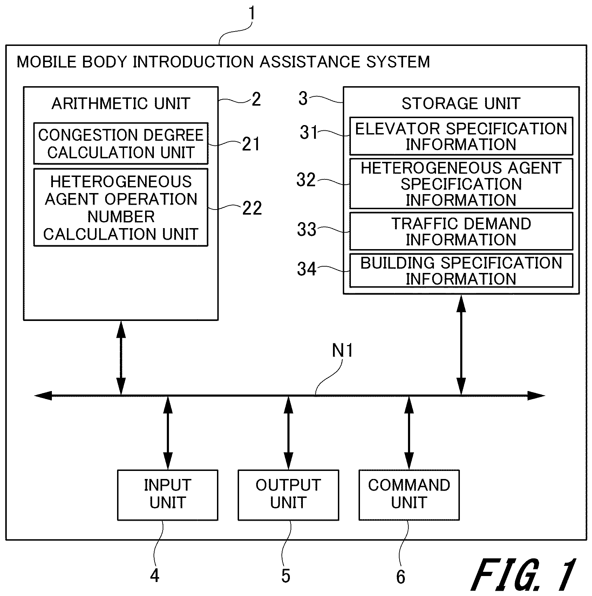

Hereinafter, exemplary embodiments of the mobile body introduction assistance system and the mobile body introduction assistance method will be described with reference to Figs. 1 to 12. In the drawings, the same members are denoted by the same reference numerals.

### 1. First Exemplary Embodiment

### 1-1. Configuration of Mobile Body Introduction Assistance System

First, configurations of a mobile body introduction assistance system and a mobile body introduction assistance method according to a first embodiment (hereinafter, referred to as "present example") will be described with reference to Figs. 1 to 4.

Fig. 1 is a block diagram illustrating a schematic configuration of a mobile body introduction assistance system according to the present example.

As illustrated in Fig. 1, a mobile body introduction assistance system 1 includes an arithmetic unit 2, a storage unit 3, an input unit 4, an output unit 5, and a command unit 6. The arithmetic unit 2, the storage unit 3, the input unit 4, the output unit 5, and the command unit 6 are connected so as to be able to mutually transmit and receive information via a network N1.

The arithmetic unit 2 is configured using, for example, a central processing unit (CPU), a micro processing unit (MPU), a digital signal processor (DSP), a graphics processing unit (GPU), or the like. The arithmetic unit 2 includes a congestion degree calculation unit 21 and a heterogeneous agent operation number calculation unit 22.

The congestion degree calculation unit 21 calculates the congestion degree in the building based on information stored in the storage unit 3 to be described later. Then, the congestion degree calculation unit 21 outputs the calculated congestion degree to the heterogeneous agent operation number calculation unit 22.

The heterogeneous agent operation number calculation unit 22 calculates the number of heterogeneous agents such as wheelchairs, personal mobility devices, and service robots as mobile bodies other than people to operate based on the congestion degree calculated by the congestion degree calculation unit 21. The heterogeneous agent operation number calculation unit 22 outputs the calculated operation number to the output unit 5 and the command unit 6.

The storage unit 3 is, for example, a read only memory (ROM), a random access memory (RAM), a non-volatile memory (non-volatile RAM (NVRAM)), a hard disk drive, a solid state drive (SSD), or the like.

The storage unit 3 stores elevator specification information 31, heterogeneous agent specification information 32, traffic demand information 33 that is movement amount information of people and heterogeneous agents, and building specification information 34. The storage unit 3 also stores past operation information of the elevator.

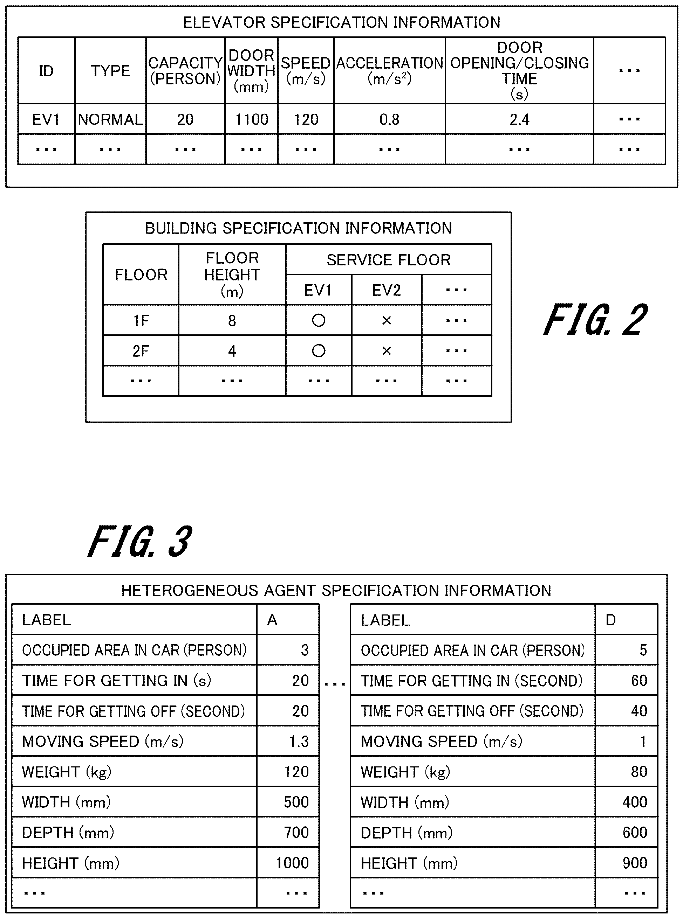

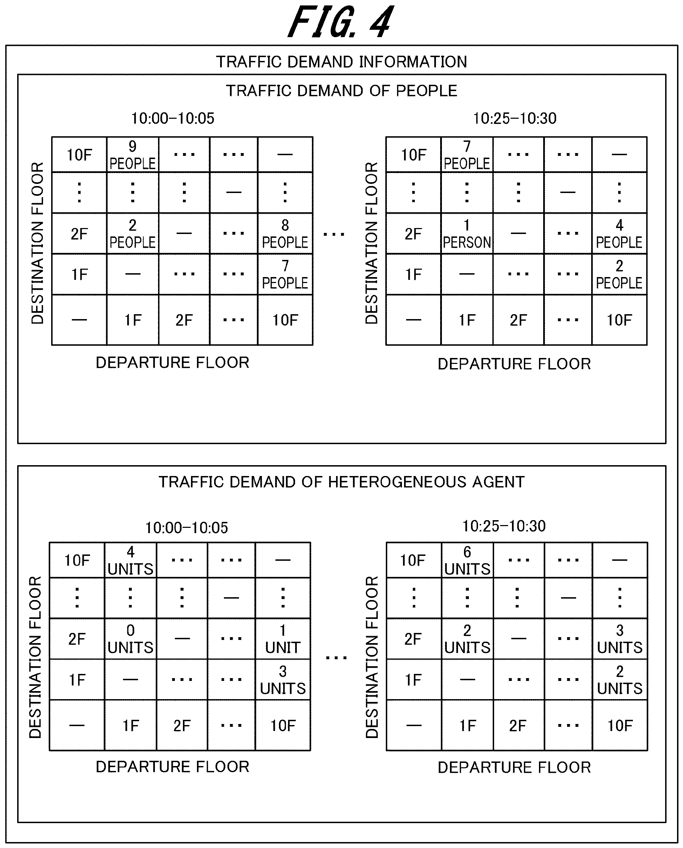

Figs. 2 to 4 are diagrams illustrating examples of various types of specification information stored in the storage unit 3. Fig. 2 illustrates an example of the elevator specification information 31 and the building specification information 34, Fig. 3 illustrates an example of the heterogeneous agent specification information 32, and Fig. 4 illustrates an example of the traffic demand information 33.

As illustrated in Fig. 2, examples of the elevator specification information 31 include "ID", "Type", "Capacity (person)", "Door width (mm)", "Speed (m/s)", "Acceleration (m/s2)", and "Door opening/closing time (s)". The building specification information 34 is, for example, "FLOOR", "FLOOR HEIGHT (mm)", "SERVICE FLOOR", and the like.

As illustrated in Fig. 3, the heterogeneous agent specification information 32 includes, for example, a "Label" indicating the type of heterogeneous agent. Then, "Occupied area in car (person)", "Time for getting in (s)", "Moving speed (m/s)", "Weight (kg)", "Width (mm)", "Depth (mm)", "Height (mm)", and the like are set in advance for each type (label) of heterogeneous agent.

As illustrated in Fig. 4, not only "Traffic demand information of people" but also "Traffic demand information of heterogeneous agent" are set in the traffic demand information 33. "Traffic demand information of people" and "Traffic demand information of heterogeneous agent" are set for each predetermined time zone.

The "Traffic demand information of people" stores the number of people who get on at a departure place (floor) and the number of people who get off at a destination (floor) assumed in a preset time zone. The "Traffic demand information of heterogeneous agent" stores the number of heterogeneous agents that get on at a departure place (floor) and the number of heterogeneous agents that get off at a destination (floor) assumed in a preset time zone. The traffic demand information 33 is updated every predetermined time or day.

The input unit 4 is an input interface that receives information from the outside. Examples of the input unit 4 include various sensors installed in the building, a touch sensor, and a keyboard. The information input to the input unit 4 is output to the arithmetic unit 2, the storage unit 3, and the like via the network N1.

The output unit 5 is an output interface that provides information to the outside. Examples of the output unit 5 include a speaker, a light emitting diode (LED), a screen display device (liquid crystal display, projector, and the like), a printing device, and a device for recording data on a recording medium.

The command unit 6 outputs the information calculated by the arithmetic unit 2 and the information input to the input unit 4 to a heterogeneous agent. Then, the heterogeneous agent operates based on the information output from the command unit 6.

### 1-2. Operation Example of Mobile Body Introduction Assistance System

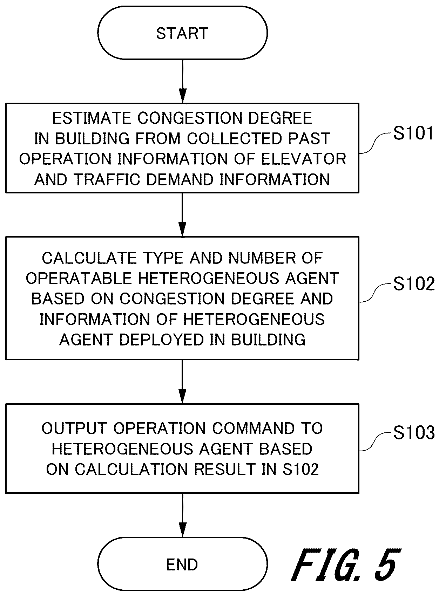

Next, an operation example of the mobile body introduction assistance system 1 having the above-described configuration will be described with reference to Figs. 5 to 6.

Fig. 5 is a flowchart illustrating an operation example of determining the number of heterogeneous agents to operate.

As illustrated in Fig. 5, the congestion degree calculation unit 21 of the arithmetic unit 2 estimates (calculates) the congestion degree in the building from the past operation information of the elevator and the traffic demand information 33 collected in the storage unit 3 (step S101). Details of a method for calculating the congestion degree will be described later.

Then, the congestion degree calculation unit 21 outputs the calculated congestion degree to the heterogeneous agent operation number calculation unit 22. Next, the heterogeneous agent operation number calculation unit 22 calculates the types and the number of operatable heterogeneous agents based on the calculated congestion degree and information (heterogeneous agent specification information 32) of the heterogeneous agents deployed in the building (step S102). Then, the heterogeneous agent operation number calculation unit 22 outputs the calculated information to the command unit 6.

Next, the command unit 6 outputs an operation command to the heterogeneous agents based on the information calculated by the heterogeneous agent operation number calculation unit 22 (step S103). The operation of determining the number of heterogeneous agents to operate using the mobile body introduction assistance system 1 is thus completed.

Examples of the command output to the heterogeneous agents in step S103 include a limit of the number of heterogeneous agents to operate for all floors of the building, a limit of the number of heterogeneous agents to operate for each floor, a limit of the number of heterogeneous agents to operate for a specific floor, and a limit of entry to a specific floor. The operation of determining the number of heterogeneous agents to operate using the mobile body introduction assistance system 1 is thus completed.

In this manner, in the mobile body introduction assistance system 1 of the present example, the number of heterogeneous agents to operate is determined according to the congestion degree, instead of stopping the movement of all the heterogeneous agents. This configuration can secure the carrying capacity of the elevator and suppress lowering in service performance of heterogeneous agents.

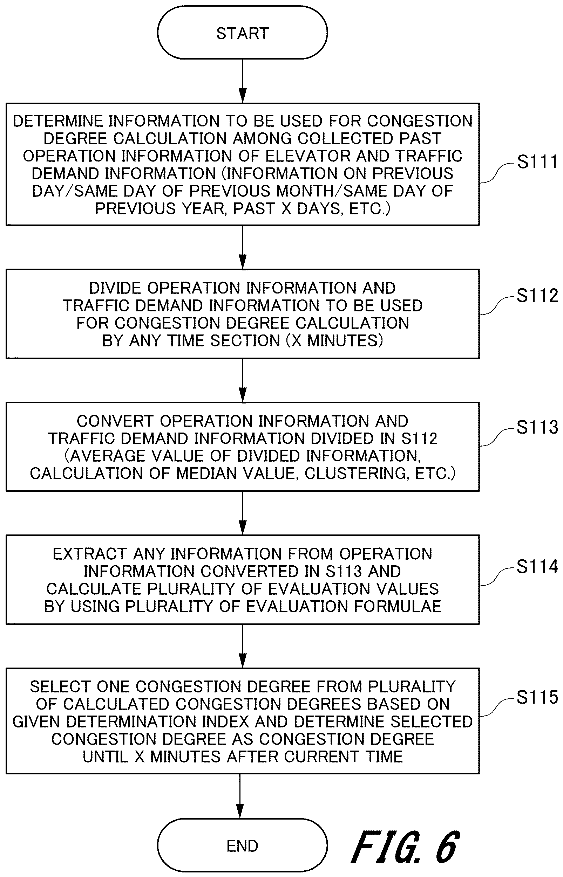

Next, an example of a method for calculating the congestion degree will be described with reference to Fig. 6.

Fig. 6 is a flowchart illustrating a method for calculating the congestion degree.

As illustrated in Fig. 6, the congestion degree calculation unit 21 determines information to be used for calculating the congestion degree among the collected past operation information of the elevator and the traffic demand information 33 (step S111). Examples of the information used for calculating the congestion degree include information on "the previous day", "the same day of the previous month", "the same day of the previous year", and "past X days". Examples of the past operation information include an average occupancy rate (%) for X minutes, an average hall call duration (second), and an average hall call passing number (time).

Next, the congestion degree calculation unit 21 divides the operation information and the traffic demand information 33 to be used for calculating the congestion degree determined in the processing of step S111 by any time section (X minutes) (step S112). Then, the congestion degree calculation unit 21 converts the operation information and the traffic demand information 33 divided in the processing of step S112 into predetermined information (step S113). The information to be converted in step S113 is an average value of the divided information, calculation of a median value, clustering, or the like.

Next, the congestion degree calculation unit 21 extracts any information from the operation information converted in the processing of step S113, and calculates a plurality of evaluation values by using a plurality of evaluation formulas (step S114). The congestion degree calculation unit 21 also selects one congestion degree from a plurality of calculated congestion degrees based on a given determination and use. Then, the congestion degree calculation unit 21 determines the selected congestion degree as the congestion degree until X minutes after the current time (step S115). The operation of calculating the congestion degree using the congestion degree calculation unit 21 is thus completed.

The method for calculating the congestion degree is not limited to the above-described method, and various other calculation methods are applied. For example, congestion degree information corresponding to a time zone is created in advance as preset information of the congestion degree and stored in the storage unit 3. Then, the congestion degree calculation unit 21 may acquire the congestion degree according to the time zone from the congestion degree information created in advance and stored in the storage unit 3. In addition, the congestion degree information stored in the storage unit 3 may be appropriately updated through actual operation or machine learning.

### 1-3. Method for Outputting Operation Performance Report

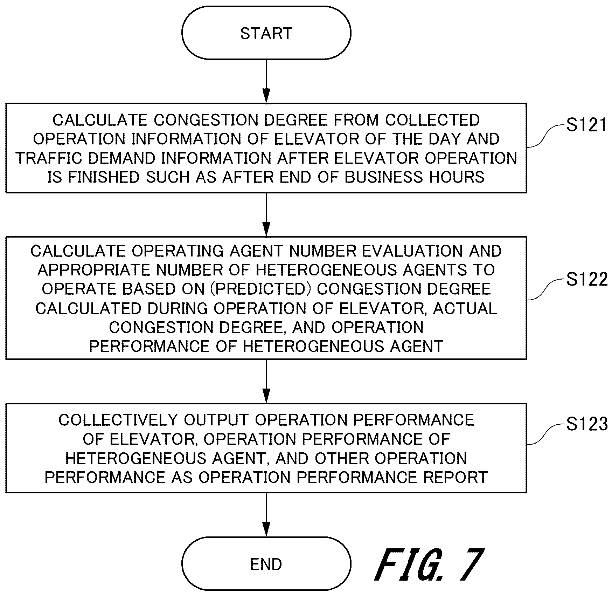

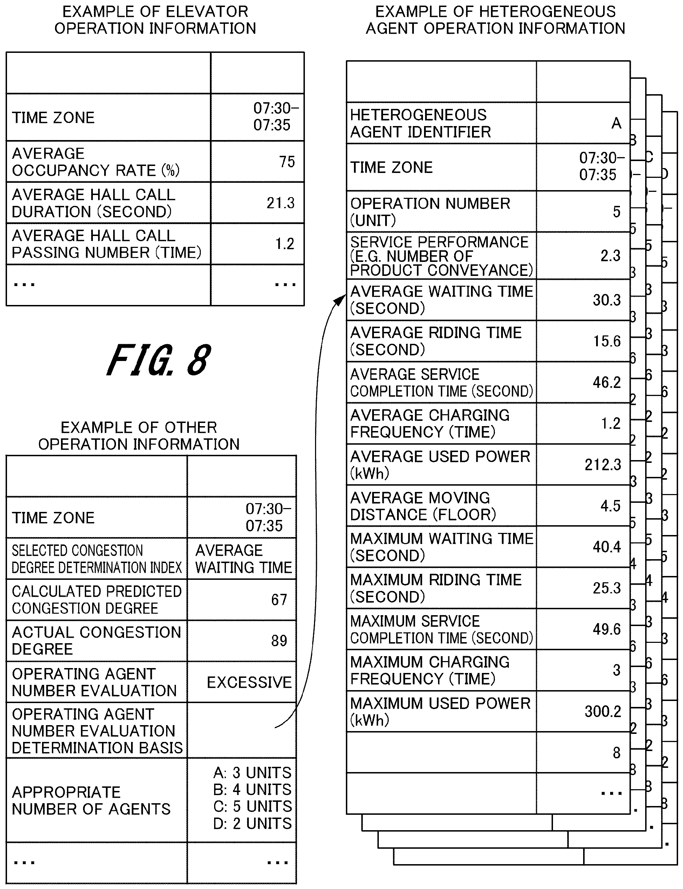

The mobile body introduction assistance system 1 of the present example also outputs an output performance report for the operation number of heterogeneous agents. Next, a method for outputting the operation performance report will be described with reference to Figs. 7 and 8.

Fig. 7 is a flowchart illustrating a method for outputting the operation performance report, and Fig. 8 is a diagram illustrating an example of the operation performance report.

As illustrated in Fig. 7, the congestion degree calculation unit 21 of the arithmetic unit 2 calculates the congestion degree from the collected operation information of the elevator of the day and traffic demand information after the elevator operation is finished such as after the end of the business hours (step S121). The processing in step S121 is not limited to the end of the business hours, and may be performed at a predetermined timing, for example. The operation information collected in step S121 is, for example, "Elevator operation information" illustrated in Fig. 8.

Next, the arithmetic unit 2 calculates the operating agent number evaluation and the appropriate number of heterogeneous agents to operate based on the (predicted) congestion degree calculated during the operation of the elevator, the actual congestion degree, and the operation performance of the heterogeneous agents (step S122). The "Other operation information" and the "Heterogeneous agent operation information" illustrated in Fig. 8 are thus created. Examples of the "Other operation information" include "Time zone", "Selected congestion degree determination index", "Calculated predicted congestion degree", "Actual congestion degree", "Operating agent number evaluation", "Operating agent number evaluation determination basis", and "Appropriate number of agents". The "Operating agent number evaluation determination basis" is calculated based on the "Heterogeneous agent operation information".

As the "Operating agent number evaluation", whether the number of heterogeneous agents is insufficient, excessive, or appropriate is set. The "Operating agent number evaluation" is calculated from the difference between the target value stored in advance in the storage unit 3 and the operation performance of the heterogeneous agents. In the "Operating agent number evaluation", whether the number of heterogeneous agents is insufficient, excessive, or appropriate is set based on the calculated difference.

Then, when the number is insufficient or excessive, the number of heterogeneous agents to be added or reduced is set to the "Appropriate number of agents". Further, when the number is insufficient or excessive, time information (waiting time or the like) serving as a determination basis is simultaneously output.

Examples of the "Heterogeneous agent operation information" include "Heterogeneous agent identifier (label)", "Time zone", "Operation number (unit)", "Service performance", "Average waiting time (second)", "Average riding time (second)", "Average service completion time (second)", "Average charging frequency (time)", "Average used power (kwh)", "Average moving distance (floor)", "Maximum waiting time (second)", "Maximum riding time (second)", "Maximum service completion time (second)", "Maximum charging frequency (time)", "Maximum used power (kwh)", and "Maximum moving distance (floor)".

Next, the output unit 5 collectively outputs the "Operation performance of elevator", the "Operation performance of heterogeneous agent", and the "Other operation performance" illustrated in Fig. 8 calculated by the arithmetic unit 2 as the operation performance report (step S123). The operation of outputting the operation performance report is thus completed.

The "Operation performance of elevator", the "Operation performance of heterogeneous agent", and the "Other operation performance" may be output simultaneously, or the "Operation performance of elevator" and the "Operation performance of heterogeneous agent" may be output, and then the "Other operation performance" may be calculated and output. Only the "Operating agent number evaluation", "Operating agent number evaluation determination basis", and "Appropriate number of agents" may be output.

In this manner, according to the mobile body introduction assistance system 1 of the present example, by creating and outputting the operation performance report, it is possible to provide appropriate information to maintenance providers of the elevator and the service robot, building owners, and users of the elevator. For example, the operation performance of the heterogeneous agents can be presented to the maintenance provider. To the building owner, whether the number of heterogeneous agents to operate is insufficient, excessive, or appropriate can be presented. To the user of the elevator, the fact that the probability of riding together with a heterogeneous agent increases or decreases according to the time zone and the reason thereof can be presented. This can improve not only the service performance of the heterogeneous agents but also the convenience of the elevator.

### 1-4. Another Example of Traffic Demand Information

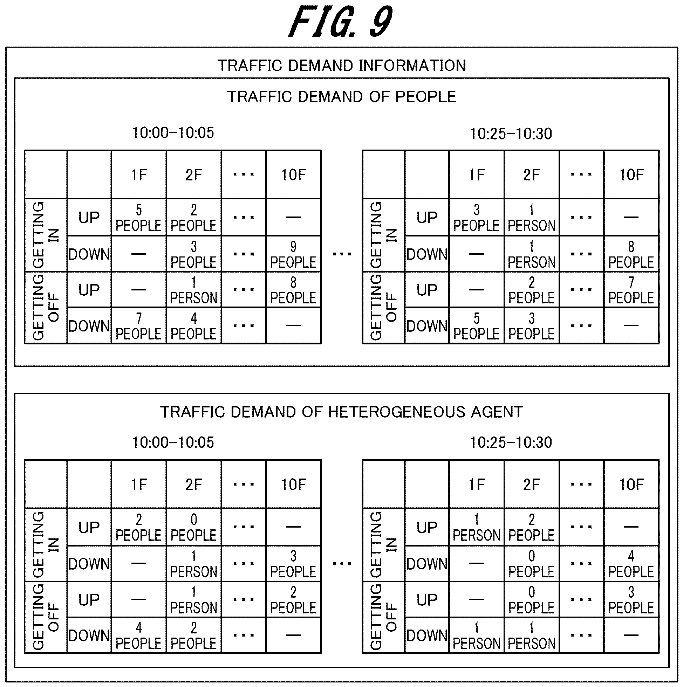

Next, another example of the traffic demand information will be described with reference to Fig. 9. Fig. 9 is a diagram illustrating another example of the traffic demand information.

As illustrated in Fig. 9, the traffic demand information includes "Traffic demand information of people" and "Traffic demand information of heterogeneous agent". "Traffic demand information of people" and "Traffic demand information of heterogeneous agent" are set for each predetermined time zone. In the "Traffic demand information of people" and the "Traffic demand information of heterogeneous agent", information of the moving directions "Up" and "Down" of the elevator car, and information of the number of people who get on and the number of people who get off on each floor are set.

The traffic demand information 33 is not limited to the examples illustrated in Figs. 4 and 9, and other various types of information may be set as the traffic demand information.

### 2. Second Exemplary Embodiment

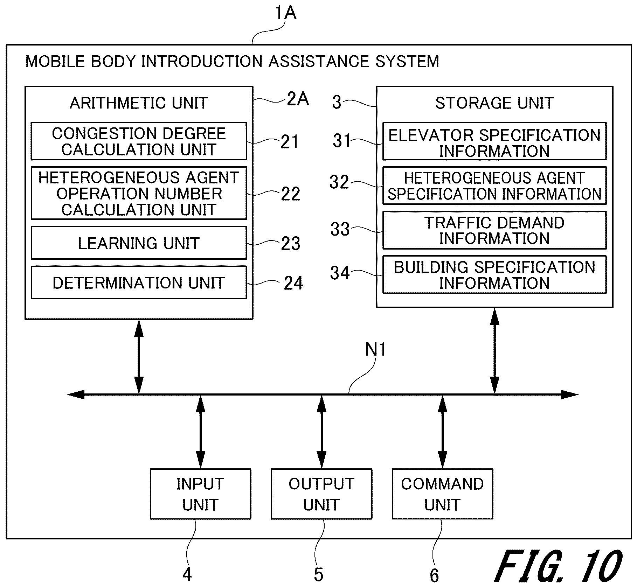

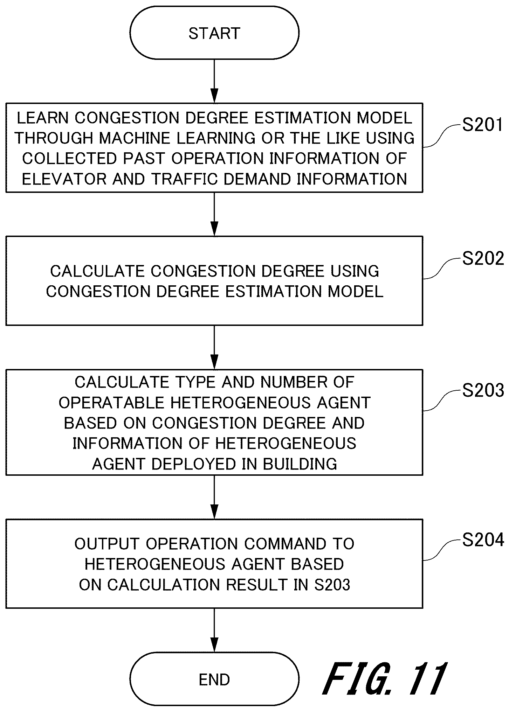

Next, a mobile body introduction assistance system according to a second exemplary embodiment will be described with reference to Figs. 10 and 11.

Fig. 10 is a block diagram illustrating a mobile body introduction assistance system according to the second exemplary embodiment, and Fig. 11 is a flowchart illustrating an operation example of the mobile body introduction assistance system according to the second exemplary embodiment.

The mobile body introduction assistance system according to the second exemplary embodiment is different from the mobile body introduction assistance system according to the first exemplary embodiment in the configuration of the arithmetic unit. Thus, the same reference numerals are given to the parts common to those of the mobile body introduction assistance system according to the first exemplary embodiment, and redundant description will be omitted.

As illustrated in Fig. 10, a mobile body introduction assistance system 1A includes an arithmetic unit 2A, a storage unit 3, an input unit 4, an output unit 5, and a command unit 6. The arithmetic unit 2A includes a congestion degree calculation unit 21, a heterogeneous agent operation number calculation unit 22, a learning unit 23, and a determination unit 24. The learning unit 23 learns the congestion degree calculated by the congestion degree calculation unit 21 from the past data to predict the congestion degree. The learning unit 23 may learn the operation number of heterogeneous agents from the number of heterogeneous agents to operate calculated by the heterogeneous agent operation number calculation unit 22 and the evaluation information input to the input unit 4. Further, the learning unit 23 learns the actual traffic demand based on the actual traffic volume of people, the operation performance of heterogeneous agents, and the like, and updates the traffic demand information 33.

The determination unit 24 selects one congestion degree based on a given determination index from a plurality of congestion degrees calculated by the congestion degree calculation unit 21. Then, the arithmetic unit 2A sets the congestion degree selected by the determination unit 24 to the congestion degree until X minutes from the current time.

Next, an operation example of the mobile body introduction assistance system 1A according to the second exemplary embodiment will be described with reference to Fig. 11.

Fig. 11 is a flowchart illustrating an operation example of determining the number of heterogeneous agents to operate.

As illustrated in Fig. 11, the learning unit 23 learns a congestion degree estimation model through machine learning or the like using the past operation information of the elevator and the traffic demand information 33 collected in the storage unit 3 (step S201). Next, the congestion degree calculation unit 21 calculates the congestion degree using the congestion degree estimation model learned by the learning unit 23 (step S202).

Then, the heterogeneous agent operation number calculation unit 22 calculates the types and the number of operatable heterogeneous agents based on the calculated congestion degree and information (heterogeneous agent specification information 32) of the heterogeneous agents deployed in the building (step S203). Next, the command unit 6 outputs an operation command to the heterogeneous agents based on the information calculated by the heterogeneous agent operation number calculation unit 22 (step S204). The operation of determining the number of heterogeneous agents to operate by the mobile body introduction assistance system 1A is thus completed.

The mobile body introduction assistance system 1A according to the second exemplary embodiment, in which the learning unit 23 learns the congestion degree estimation model, can improve the accuracy of the congestion degree calculated by the congestion degree calculation unit 21 and can determine the more appropriate number of heterogeneous agents to operate.

Since other configurations are the same as those of the mobile body introduction assistance system 1 according to the first exemplary embodiment, the description thereof will be omitted. A hoisting machine including the mobile body introduction assistance system 1A having such a configuration can also obtain the same operational effects as those of the mobile body introduction assistance system 1 according to the first exemplary embodiment described above.

### 3. Third Exemplary Embodiment

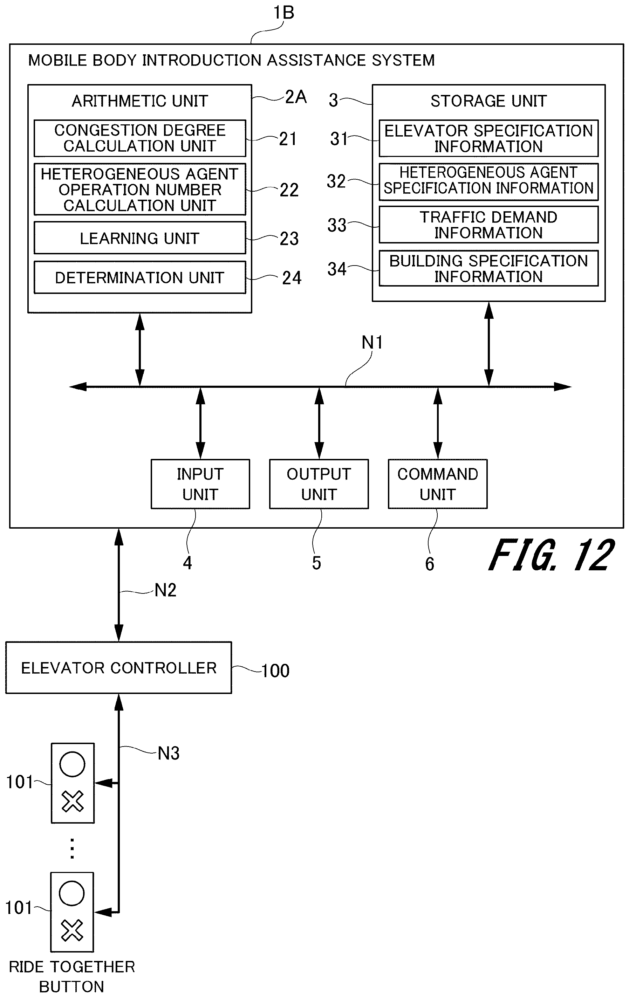

Next, a mobile body introduction assistance system according to a third exemplary embodiment will be described with reference to Fig. 12.

Fig. 12 is a block diagram illustrating a mobile body introduction assistance system 1B according to the third exemplary embodiment. The parts common to the mobile body introduction assistance system 1 according to the first exemplary embodiment and the mobile body introduction assistance system 1A according to the second exemplary embodiment are denoted by the same reference numerals, and redundant description will be omitted.

As illustrated in Fig. 12, the mobile body introduction assistance system 1B is connected to an elevator controller 100 that controls the driving of the elevator via a network N2. The operation performance information of the elevator and the traffic important information are input from the elevator controller 100 to the input unit 4 of the mobile body introduction assistance system 1B via the network N2. The traffic demand information 33 in the storage unit 3 is updated based on this information.

In addition, in the hall of each floor where the elevator stops, a ride together button 101 that allows a person on the elevator car to refuse or permit riding together with a heterogeneous agent is provided. The ride together button 101 and the elevator controller 100 are connected via a network N3. Then, the input information to the ride together button 101 is input to the mobile body introduction assistance system 1B via the networks N2 and N3.

Based on the information from the ride together button 101, the command unit 6 of the mobile body introduction assistance system 1B outputs a command to the heterogeneous agent. For example, when riding with a heterogeneous agent is refused, command information is output to the heterogeneous agent so that the heterogeneous agent does not get on the elevator car. This configuration can enhance convenience of the people who use the elevator.

Since other configurations are the same as those of the mobile body introduction assistance system 1 according to the first exemplary embodiment, the description thereof will be omitted. The mobile body introduction assistance system 1B having such a configuration can also obtain the same operation and effect as those of the mobile body introduction assistance system 1 according to the first exemplary embodiment described above.

The present invention is not limited to the embodiments described above and illustrated in the drawings, and various modifications can be made without departing from the gist of the invention described in the claims.

A part of the configuration of a certain embodiment can be replaced with the configuration of another embodiment, and the configuration of another embodiment can be added to the configuration of a certain embodiment. It is also possible to add, delete, and replace other configurations for a part of the configuration of each embodiment. Some or all of the above-described configurations, functions, processing units, processing means, and the like may be realized by hardware, for example, by designing with an integrated circuit. Each of the above-described configurations, functions, and the like may be realized by software by a processor interpreting and executing a program for realizing each function. Information such as a program, a table, and a file for realizing each function can be stored in a recording device such as a memory, a hard disk, and a solid state drive (SSD), or a recording medium such as an IC card, an SD card, or a DVD.

### Reference Signs List

1, 1A, 1B Mobile body introduction assistance system
2, 2A Arithmetic unit
3 Storage unit
4 Input unit
5 Output unit
6 Command unit
21 Congestion degree calculation unit
22 Heterogeneous agent operation number calculation unit
23 Learning unit
24 Determination unit
31 Elevator specification information
32 Heterogeneous agent specification information
33 Traffic demand information
34 Building specification information
100 Elevator controller
101 Ride together button

## Claims

1. A mobile body introduction assistance system comprising:
a congestion degree calculation unit that acquires congestion degree information of people who move in a building and heterogeneous agents that move in the building, the heterogeneous agents being mobile bodies different from people; and
a heterogeneous agent operation number calculation unit that determines the number of the heterogeneous agents to operate based on the congestion degree information acquired by the congestion degree calculation unit.

2. The mobile body introduction assistance system according to claim 1, further comprising
a storage unit that stores traffic demand information that is movement amount information of the people who move in the building and the heterogeneous agents that move in the building, wherein
the congestion degree calculation unit calculates the congestion degree information based on the traffic demand information.

3. The mobile body introduction assistance system according to claim 2, wherein
the congestion degree calculation unit calculates the congestion degree information based on past operation information of an elevator installed in the building and the traffic demand information.

4. The mobile body introduction assistance system according to claim 3, wherein
the congestion degree calculation unit calculates a plurality of congestion degrees by using a plurality of calculation methods, and selects the congestion degree information to be used by the heterogeneous agent operation number calculation unit based on a given determination and use from among the plurality of calculated congestion degrees.

5. The mobile body introduction assistance system according to claim 2, further comprising
a learning unit that learns a congestion degree estimation model based on past operation information of an elevator installed in the building and the traffic demand information, wherein
the congestion degree calculation unit calculates the congestion degree information by using the congestion degree estimation model learned by the learning unit.

6. The mobile body introduction assistance system according to claim 1, further comprising
an arithmetic unit that evaluates the number of the heterogeneous agents to operate based on an operation performance of the heterogeneous agents and a preset target value.

7. The mobile body introduction assistance system according to claim 6, wherein
the arithmetic unit calculates a difference between the congestion degree information calculated by the congestion degree calculation unit and an actual congestion degree for each time and outputs the difference as an operation performance report.

8. The mobile body introduction assistance system according to claim 1, further comprising
an output unit that is connected to an elevator controller that controls driving of an elevator installed in the building, and outputs command information to the heterogeneous agents based on information from the elevator controller.

9. A mobile body introduction assistance method comprising:
processing of acquiring congestion degree information of people who move in a building and heterogeneous agents that move in the building, the heterogeneous agents being mobile bodies different from people, by using a congestion degree calculation unit; and
processing of determining the number of the heterogeneous agents to operate by using a heterogeneous agent operation number calculation unit based on the congestion degree information acquired by the congestion degree calculation unit.
